Europäisches Patentamt

European Patent Office

Office européen des brevets

(11) Numéro de publication: **0 235 012**
**A1**

# DEMANDE DE BREVET EUROPEEN

(21) Numéro de dépôt: **87400243.9**

(22) Date de dépôt: **03.02.87**

(51) Int. Cl.⁴: **H 04 B 7/24**
H 04 L 11/16, H 04 L 11/20

(30) Priorité: **04.02.86 FR 8601525**

(43) Date de publication de la demande:
**02.09.87 Bulletin 87/36**

(84) Etats contractants désignés: **AT BE DE IT LU**

(71) Demandeur: **CIMSA SINTRA**
**26, rue Malakoff**
**F-92600 Asnieres (FR)**

(72) Inventeur: **Lonc, Philippe**
**THOMSON-CSF SCPI 19, avenue de Messine**
**F-75008 Paris (FR)**

**Gilbert, Jean-Charles**
**THOMSON-CSF SCPI 19, avenue de Messine**
**F-75008 Paris (FR)**

(74) Mandataire: **Benoit, Monique et al**
**THOMSON-CSF SCPI 19, avenue de Messine**
**F-75008 Paris (FR)**

(54) **Procédé et dispositif de transmission de données alphanumériques par voie radio.**

(57) L'invention concerne principalement un procédé et un dispositif de transmission de données alphanumériques par voie radio.

Les émetteurs-récepteurs radio présentent d'une part, un temps de montée en puissance important et, d'autre part, il leur est impossible d'écouter les émissions d'autres émetteurs pendant leurs propres émissions. Ainsi dans un tel réseau de transmission des collisions de trames sont impossibles à détecter en temps réel. Le dispositif et le procédé selon l'invention permettent de ne commencer à émettre qu'à des dates précises (51) l'intervalle de temps (26) entre deux dates (51) successives de début d'émission étant connu et défini à partir de critères comme le temps de montée en puissance d'un émetteur (4). Ainsi, il est possible de détecter avant le commencement d'une procédure d'émission l'émission d'un autre émetteur (4) dont la procédure d'émission a commencé à la date (51) précédente.

L'invention s'applique principalement à la réalisation de réseaux de transmission alphanumérique utilisés pour la transmission par voie hertzienne.

FIG_1

**Description**

PROCEDE ET DISPOSITIF DE TRANSMISSION DE DONNEES ALPHANUMERIQUES PAR VOIE RADIO

L'invention concerne principalement un procédé et un dispositif de transmission de données alphanumériques par voie radio.

La transmission de données alphanumériques présente l'avantage d'une interprétation facile et d'une grande précision. La transmission peut se faire aussi bien entre deux hommes, entre un homme et une machine ou entre deux machines.

La transmission radioélectrique de données permet de s'affranchir de la nécessité de relier par un câble électrique les émetteurs et les récepteurs. La souplesse de transmission de données par voie radio est particulièrement importante dans le cas des émetteurs et/ou des récepteurs mobiles.

Toutefois, la transmission de données par voie radio présente des contraintes et des inconvénients.

Par exemple, la fiabilité de la transmission est faible. Ainsi, le taux d'erreur de transmission étant important, on est obligé de transmettre des messages courts. Un message long sera ainsi partagé en une suite de messages courts. La bonne réception des messages peut être confirmée par le récepteur.

De même, les émetteurs présentent un temps de montée important de l'ordre du quart de la seconde.

Un autre inconvénient de la transmission des données par voie radio est la possibilité de brouillage.

On peut citer aussi en tant, qu'inconvénient de la transmission de données par voie radio, l'impossibilité d'écouter, pour un émetteur-récepteur, les émissions des autres émetteurs pendant ses propres émissions. Dans un tel cas, ses propres émissions étant prédominantes, elles couvrent nécessairement le niveau de réception des autres émetteurs.

· Il est connu, dans les réseaux de transmission de données alphanumériques, comportant plusieurs stations d'émission et de réception, d'utiliser la méthode dite CSMA (Carrier Sens Multiple Access). La méthode CSMA consiste à écouter sur la voie de transmission si aucune transmission n'a lieu. C'est uniquement dans ce cas, qu'une station peut émettre sur la voie de transmission. Dans les versions destinées aux réseaux câblés, la station qui est en train d'émettre, écoute toujours la voie de transmission, et contrôle ainsi si une autre station, considérant que la voie est libre, n'a pas commencé à émettre simultanément. Si deux messages sont présents sur le câble de transmission en même temps, on dit qu'il y a collision de deux messages. Mais, dans un tel cas, la collision peut être détectée par écoute des messages sur les câbles, et les deux stations qui étaient en train d'émettre, stoppent les émissions et réémettent leurs messages chacun leur tour.

Dans le cas où la voie de transmission est une voie radio, l'écoute étant impossible, il n'est plus possible de détecter les collisions.

Par ailleurs, il est connu d'utiliser pour transmettre entre une pluralité d'émetteurs-récepteurs radio, la méthode à réservation fixe de temps ou de fréquence. Dans le premier cas, chaque émetteur dispose d'une partie du temps pour effectuer ses émissions. Cette méthode est appelée méthode par Accès Multiple par Répartition dans le Temps (AMRT en abréviation). Cette méthode, présente l'inconvénient de ne permettre qu'un faible débit d'information par rapport au débit potentiel de la voie et n'offre pas toute la souplesse requise pour satisfaire des pointes de trafic. En effet, si un émetteur n'a pas de message à transmettre, aucun autre émetteur ne peut utiliser le temps d'émission qui lui était assigné. De plus, cette méthode est particulièrement sensible au brouillage. En effet, pour brouiller les messages émis par un émetteur, il suffit de brouiller de façon systématique la voie radio pendant le temps qu'il lui est assigné.

Les méthodes à réservation fixe de fréquence, réservant à chacun des émetteurs une partie de la bande de fréquence, utilisent soit une bande de fréquence très large, soit réservent une bande passante faible à chacun des émetteurs.

La méthode de transmission objet de la présente invention utilise une méthode de transmission du type CSMA. Dans la méthode, selon l'invention, l'émission ne peut commencer qu'à certaines dates prédéterminées, par exemple au début de créneaux temporels de durée égale. Il est particulièrement avantageux, que la durée d'un créneau soit sensiblement égale au temps de montée en puissance d'un émetteur. Ces créneaux sont regroupés par multiple et forment des grands créneaux dont la durée peut être égale par exemple à onze fois le temps de monter en puissance d'un émetteur. Le temps de montée en puissance d'un émetteur est le temps s'écoulant entre la commande d'émission d'un émetteur et le moment où le premier bit du message est émis. Ces temps sont souvent de l'ordre du quart de la seconde. Par ailleurs, le temps de propagation du message est négligeable devant le temps de montée (les ondes électromagnétiques se propagent à la vitesse proche de 300000 km/s).

L'adoption de la durée des créneaux temporels sensiblement égale au temps de montée des émetteurs permet d'éviter qu'un des émetteurs initialise la procédure d'émission pendant que la voie radio est libre, alors qu'un autre émetteur est en train de monter en puissance, ayant initialiser sa procédure d'émission, mais n'émettant pas encore sur la voie radio. Ainsi, le dispositif selon l'invention réduit très sensiblement les probabilités des collisions.

L'invention a principalement pour objet un procédé de transmission entre une pluralité d'émetteurs et/ou récepteurs alphanumériques utilisant au moins une voie radio, caractérisé par le fait que le début d'émission d'un quelconque desdits émetteurs ne peut que coïncider avec des dates préétablies.

L'invention a aussi pour objet un dispositif de transmission alphanumérique par voie radio comportant un émetteur/récepteur, un adaptateur, un clavier et un dispositif de visualisation, caractérisé par le fait qu'il comporte des moyens permettant d'initialiser la procédure d'émission avec des dates préétablies.

L'invention sera mieux comprise au moyen de la description ci-après et des figures annexées, données comme des exemples non limitatifs parmi lesquels :

    - la figure 1 est un schéma illustrant le dispositif selon l'invention ;

    - la figure 2 est un schéma illustrant le réassemblage d'informations à la réception ;

    - la figure 3 est un schéma illustrant les diverses couches de la méthode de transmission selon l'invention ;

    - la figure 4, illustre une première variante de mise en oeuvre de la méthode selon l'invention ;

    - la figure 5, illustre une seconde variante de mise en oeuvre de la méthode selon l'invention ;

    - la figure 6, illustre une troisième variante de mise en oeuvre de la méthode selon l'invention.

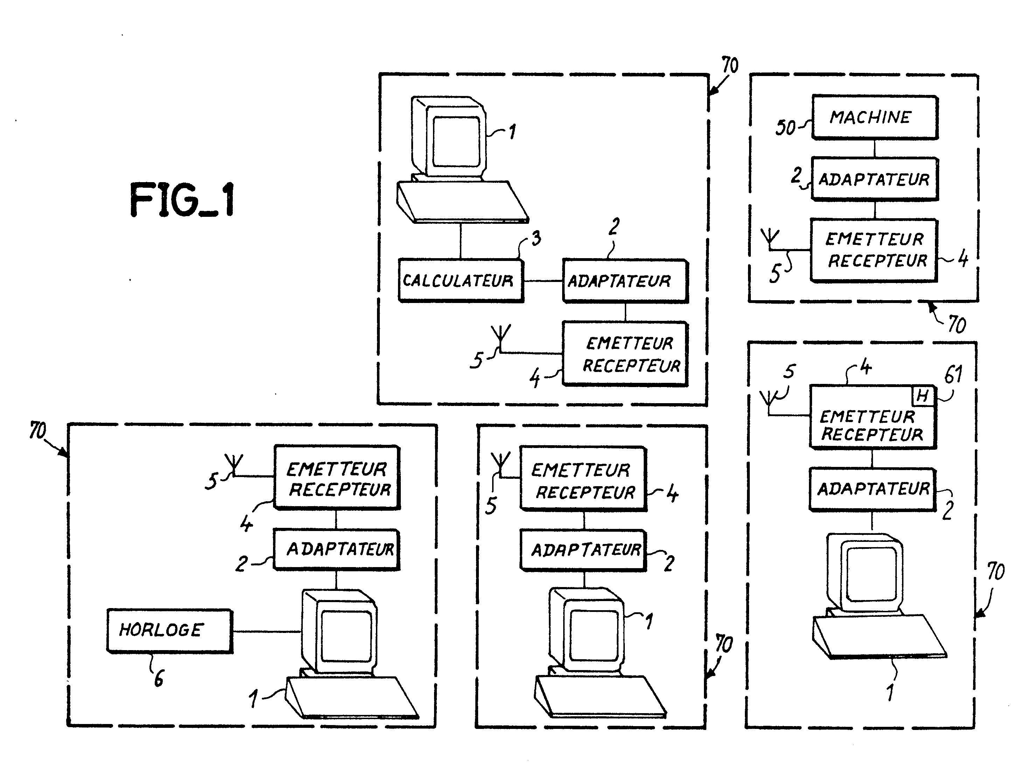

Sur les figures 1 à 6 on a utilisé les mêmes références pour désigner les mêmes éléments.

Sur la figure 1, on peut voir un réseau de transmission de données alphanumériques par voie radio.

Sur la figure 1, on a représenté uniquement cinq stations, étant bien entendu qu'un nombre plus important des stations de transmission peut être utilisé.

Une station 70 comporte un terminal ou un ordinateur 1, un adaptateur de transmission 2, un émetteur-récepteur 4 et une antenne 5. Certaines stations de transmission 70 comportent en plus entre le terminal 1 et l'adaptateur de transmission, un calculateur 3. Les terminaux d'abonnés 1 comportent en plus une logique permettant la commande de la station de transmission 70.

Le terminal 1 permet la communication de l'homme avec le reste de la station de transmission 70. Le terminal 1 comporte, par exemple, un clavier alphanumérique, un écran de visualisation et/ou une imprimante. Pour les stations de communication de faible encombrement, on utilisera avantageusement des écrans plats comme, par exemple, les écrans à plasma, les écrans à diodes électroluminescentes ou les écrans à cristaux liquides.

L'adaptateur de transmission 2 peut comporter un modem chiffrant. Cet adaptateur est, par exemple, le modem chiffrant vendu par la Société THOMSON-CSF sous la référence TRC 774, pour les émetteurs-récepteurs à fréquence fixe ou l'adaptateur, vendu par la Société THOMSON-CSF sous la référence TRC 750, pour les émetteurs-récepteurs à évasion de fréquence.

Les émetteurs-récepteurs 4 sont des émetteurs-récepteurs radioélectriques de type classique. Les émetteurs-récepteurs sont, par exemple, des émetteurs-récepteurs vendus par la Société THOMSON-CSF sous la référence TRVP 213 ou sous la référence TRC 950.

Une station de transmission 70 peut comporter, alliée à l'adaptateur 2 une machine 50. Ainsi, il est possible de télécommander des automates à commande numérique et/ou de recevoir des informations acquises par des capteurs.

Pour le bon fonctionnement du réseau de transmission, il est impératif d'établir la synchronisation des stations 70.

Dans une première variante de réalisation du dispositif selon l'invention, la synchronisation est assurée par voie radio à partir d'une station 70 comportant une horloge de haute précision 6. Cet exemple de réalisation présente l'inconvénient d'encombrer la voie radio.

Dans une seconde variante de réalisation du dispositif selon l'invention, chaque station 70 est équipée d'une horloge 6. Pour des horloges de précision moyenne, on effectue de temps à autre la synchronisation des horloges 6 de chaque station, à partir d'une horloge plus précise que comprend une des stations.

Dans le cas de l'utilisation des horloges de très grande précision comme, par exemple, les horloges atomiques, la synchronisation des horloges de station n'est plus nécessaire ou n'est nécessaire qu'à l'initialisation du système. On utilise, par exemple, des horloges atomiques au rubidium.

Les émetteurs à évasion de fréquence comportent une horloge interne permettant la synchronisation des changements de fréquence. Il est avantageux d'utiliser cette horloge déjà incorporée à l'émetteur-récepteur pour la synchronisation des stations de transmission 70.

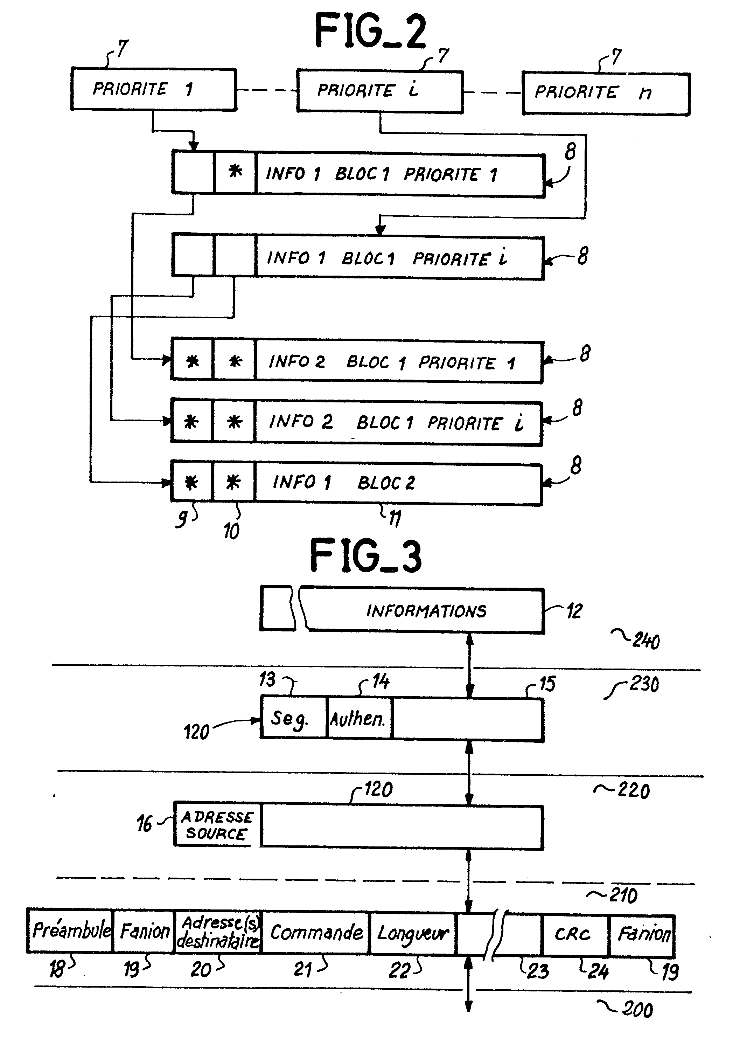

Pour diminuer la probabilité d'erreurs dans la transmission sur la voie radio, il est avantageux d'émettre des petits blocs d'information. Un bloc comporte par exemple 250 octets. Une information plus longue à transmettre sera découpée en blocs de 250 octets. Sur la figure 2, on peut voir une file de message à la réception permettant le réassemblage des informations reçues.

Dans l'exemple illustré sur la figure 2, on a supposé que n groupes d'émetteurs comportent n niveaux de priorité. A la réception, on constitue une file de messages par niveau de priorité. Pour chaque niveau de priorité de 1 à n, on réserve un pointeur 7 de priorité. Chaque trame 8 dans la file des messages comporte un chaînage de priorité 9, un chaînage de segmentation 10, un bloc d'information 11.

Avantageusement, toutes les stations de transmission 70 calculent le nombre de transmissions sur la voie radio par unité de temps. Si la charge totale de la voix radio est supérieure à un seuil appelé charge critique, les stations de transmissions 70 étalent dans le temps leurs émissions. Ainsi, lorsque la charge augmente, les abonnés régulent d'eux mêmes leur trafic en n'émettant que périodiquement en utilisant un algorithme de désaturations. Les phénomènes de collision sont donc atténués et le seuil de saturation de la voie radio est donc repoussé. Il est toujours possible de transmettre un message la voie n'étant pas saturée.

Avantageusement, on définit dans ce cas des groupes de stations prioritaires.

Sur la figure 2, on a représenté par des étoiles les fins des chaînages et par des flèches les chaînages successifs. Le numéro du message transmis est noté info. Sur la première ligne de la file de la figure 1 est représentée une trame 8 comportant le premier bloc du premier message de la priorité 1. L'étoile dans la case 10 indique que le message 1 ne comportait qu'un seul bloc. Ensuite la trame reçue était celle comportant le premier bloc du premier message de priorité i. Pour la clarté de la figure 2, dans l'exemple qui y est illustré, seules deux priorités sont présentes. La trame de la première ligne est chaînée à la trame 8 de la troisième ligne. La trame de la troisième ligne correspond au premier bloc du second message de la priorité 1. Le second message de la priorité 1 ne comporte qu'un seul bloc. La trame 8 de la seconde ligne est chaînée à la trame 8 de la ligne 4. La trame 8 de la ligne 4 correspond au premier bloc du second message de la priorité i. La cinquième trame 8 correspond au second bloc du premier message de la priorité i.

Pour un numéro de priorité donné et un numéro de message donné, tous les blocs proviennent d'un même émetteur-récepteur 4. Par contre, pour un même numéro de priorité, deux messages différents peuvent provenir de deux émetteurs différents d'un même groupe de priorité.

Dans une première variante de réalisation du dispositif selon l'invention, à chaque émetteur est assigné un niveau de priorité. Par exemple, un émetteur principal écoulant par exemple de l'ordre de 50% du trafic aura une priorité supérieure à toutes les autres stations 70 qui seront celles dotées d'une priorité identique.

Dans une seconde variante de réalisation du dispositif selon l'invention, certaines stations 70 peuvent demander divers degrés de priorité pour des messages urgents.

Sur la figure 3, on peut voir un schéma illustrant les cinq couches du réseau de transmission selon l'invention. Sur la figure 3 :
-la couche physique porte la référence 200 ;
-la sous-couche contrôle d'accès correspondant aux trames émises porte la référence 210 ;
-la sous-couche transfert porte la référence 220 ;
-la couche réseau porte la référence 230 ; et
-la couche de l'application informatique porte la référence 240.

L'application informatique 240 comporte les informations à transmettre 12.

La couche de réseau 230 transmet le paquet d'informations 120 comportant les blocs d'information 15 obtenus par segmentation de l'information 12, un authentifieur 14 ainsi que des informations de segmentation 13. Le bloc 15 correspond à la découpe de l'information 12 en bloc par exemple de 250 octets. L'authentifieur 14 permet, si cela est estimé nécessaire dans le réseau, d'authentifier l'origine du message. Ceci permet d'éviter la transmission d'informations fausses, voulue ou non, par un émetteur extérieur au réseau. Les informations de segmentation 13 permettent à la réception la reconstitution du message.

La sous-couche transfert rajoute au paquet 120 l'adresse 16 de l'émetteur.

La sous-couche contrôle d'accès 210 permet la génération d'une trame complète. En plus des blocs d'information 23, elle comporte les informations sur les adresses des destinataires du message 20, des fanions 19 de délimitation. Elle comporte avantageusement en plus un préambule 18, un champ de commande 21, un message 22 sur la longueur de la trame émise, ainsi que des bits de parité permettant la détection d'erreur. La couche physique 200 émet une telle trame constituée par la sous-couche contrôle d'accès 210.

Les stations destinataires du message effectuent l'acquittement après une bonne réception. Faute de quoi, l'émission est répétée. Si cette fois ci, une bonne réception est obtenue le destinataire émet un acquittement. Si non, par exemple, l'émetteur réémet une dernière fois le message.

A l'initialisation, une station principale assure l'émission d'un paquet de services (demandes de connexions) envoyé à tous les abonnés définis dans une table. Chaque abonné qui reçoit correctement le paquet (demandes de connexions), renvoie un paquet de services (confirmations de connexions). A la réception de la trame (confirmations de connexions), si l'authentifieur est exact, la station principale met à jour la table et déclare l'abonné "connecté en liaison".

La procédure de "demandes de connexions" est répétée à l'adresse des émetteurs n'ayant pas répondu. Par exemple, l'émission de la trame "demandes de connexions" effectuée à nouveau, deux fois, à une minute d'intervalle, vers les émetteurs n'ayant pas répondu. La station principale est automatiquement considérée "connectée en liaison" par toutes les autres stations. Avantageusement, lors de l'initialisation du réseau, chaque abonné envoie simultanément un message vers la station principale et le même message vers tous les autres abonnés, permettant, ainsi, la mise à jour des tables de toutes les stations. Lors de connexions ultérieures d'un abonné, la station principale transmet vers les autres stations la mise à jour de la table.

La fermeture du réseau est effectuée par l'envoi d'une trame de service "fermeture de connexion" à l'ensemble des stations déclarées connectées dans la table de la station principale.

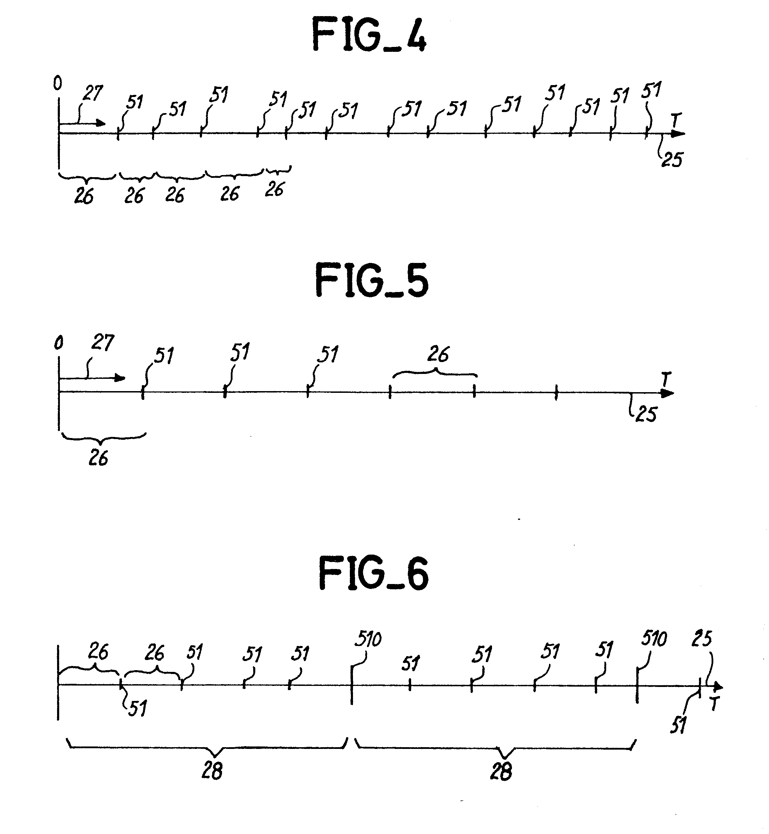

Sur la figure 4, on peut voir un schéma illustrant les instants possibles des débuts d'émission d'un quelconque des émetteurs. Les dates 51, correspondant à des débuts d'émissions possibles, sont séparées par des intervalles de temps 26. Les intervalles de temps 26 sont de même ordre de grandeur que le temps de montée en puissance d'un émetteur. Ainsi, si un émetteur avait commencé la procédure d'émission à une des dates 51, un autre émetteur détectera cette émission avant la date 51 suivante d'émission possible.

Dans l'exemple de la figure 4, les longueurs de temps 26 suivent une loi pseudo aléatoire rendant plus difficile le brouillage. En effet, il est plus difficile de repérer les débuts d'émission si elles suivent une loi pseudo-aléatoire. Il est évident que chaque émetteur comporte un même générateur des périodes aléatoires 26 qui sont ainsi synchronisées.

Sur la figure 5, on peut voir les dates 51 possibles de début d'émission, séparées par des intervalles 26 de même durée. La flèche 27 illustre un exemple de temps de montée d'émetteur. L'exemple illustré sur la figure 5 présente l'avantage de la simplicité de réalisation.

Sur la figure 6, on peut voir un schéma illustrant les dates 51 possibles d'émission d'un émetteur. En plus des intervalles 26 séparant deux dates consécutives 51 de début d'émission possible, la courbe 25 comporte des dates 510 correspondant au début des grands intervalles 28. Dans l'exemple illustré sur la figure 6, chacun des grands intervalles 28 comporte cinq petits intervalles 26. Le découpage du temps 25 en des grands intervalles 28, eux mêmes découpés en des petits intervalles 26, permet de réserver certains des intervalles 26 d'un intervalle 28 aux émetteurs prioritaires. Par exemple, les intervalles 26 sont assignés dans l'ordre croissant à l'intérieur de chaque intervalle 28 au groupe d'émetteurs de priorité décroissante. Par exemple, le premier intervalle 26 de chaque intervalle 28 sera réservé aux émetteurs ayant la priorité d'ordre 1, le second intervalle 26 de chaque intervalle 28 sera réservé aux émetteurs d'ordre de priorité égal à un ou à deux, le troisième intervalle 26 de chaque intervalle 28 sera réservé au groupe d'émetteurs d'ordre de priorité inférieur ou égal à trois et ainsi de suite.

Dans une autre variante de réalisation comportant uniquement deux groupes de priorité, le premier intervalle 26 de chaque intervalle 28 est réservé à un émetteur prioritaire les autres intervalles 26 de chaque intervalle 28 n'étant pas réservés ou étant réservés aux émetteurs non prioritaires.

Nous allons donné ci-dessous un exemple du contenu du champ de commande 21 de la trame illustrée sur la figure 3.

Le champ de commande 21 d'une trame d'information comporte quatre 0, sur les quatre premiers bits, le numéro de la trame, sur les douze bits suivants, un 1 sur le dix-septième bit suivi du numéro du grand intervalle 28 pour les émissions de la station principale codées sur ce bit ou des zéros si l'émission ne provient pas de la station principale.

Le champ de commande 21 d'une trame de demande de connexion comporte trois 0, un 1, treize 0, suivi du numéro du grand intervalle 28 en cas d'émission de la station principale ou des sept 0 dans le cas d'une émission d'une station différente de la station principale.

Le champ de commande 21 d'une trame des confirmations des connexions commence par deux 0, un 1, un 0, suivi des informations relatives à la connexion réalisée comme par exemple l'adresse, le numéro de groupe, codées sur douze bits, un 0, le numéro du grand intervalle 28 dans le cas de l'émission de la station principale et sinon les sept 0.

Le champ de commande 21 d'une trame de fermeture de connexion commence par deux 0 suivi des deux 1 suivi par vingt 0.

Le champ de commande 21 d'une trame de confirmation de déconnexion commence par un 0 suivi d'un 1 suivi de vintg-deux 0.

Le champ de commande 21 d'une trame d'acquittement commence par un 0, un 1, un 0, un 1 suivi du numéro de la trame acquittée codée sur douze bits suivi du rang de l'acquittement codé sur quatre bits suivi du rang de l'acquittement codé sur quatre bits suivi du nombre d'acquittements codé sur quatre bits.

L'invention s'applique principalement à la réalisation de réseaux de transmissions alphanumériques utilisés pour la transmission utilisant des ondes électromagnétiques.

Le dispositif selon l'invention est particulièrement adapté au réseau comportant un nombre de stations important par exemple trente-deux.

## Revendications

1. Procédé de transmission entre une pluralité d'émetteurs et/ou récepteurs (4) alphanumériques utilisant au moins une voie radio, le début d'émission d'un quelconque desdits émetteurs ne peut que coïncider avec des dates préétablies (51, 510), équidistantes dans le temps, caractérisé par le fait que la durée (26) entre deux dates (51) successives de début possible d'émission d'un des émetteurs (4) est sensiblement égale au temps de montée en puissance desdits émetteurs (4).

2. Procédé selon la revendication 1, caractérisé par le fait que les émetteurs/récepteurs (4) n'émettent que si avant le début de la procédure d'émission la voie radio est libre (CSMA).

3. Procédé selon l'une quelconque des revendications précédentes, caractérisé par le fait que des durées spéciales sont prévues pour l'émission de certains émetteurs (4) prioritaires.

4. Procédé selon l'une quelconque des revendications précédentes, caractérisé par le fait que le temps est partagé en des créneaux (28) eux-mêmes étant partagés en des créneaux plus petits (26), les dates (51) de début d'émission correspondant au début desdits créneaux plus petits.

5. Procédé selon la revendication 4, caractérisé par le fait que les premiers petits créneaux (26) de chaque grand créneau (28) sont réservés par ordre de priorité décroissante aux émetteurs (4) prioritaires.

6. Procédé selon l'une quelconque des revendications précédentes, caractérisé par le fait que la synchronisation des dates (51, 510) de début d'émission est effectuée par voie radio.

7. Dispositif de transmission alphanumérique par voie radio comportant un émetteur/récepteur (4), un adaptateur (2), un clavier (3) et un dispositif de visualisation (1), caractérisé par le fait qu'il comporte des moyens permettant d'initialiser la procédure d'émission avec des dates préétablies (51, 510).

8. Dispositif selon la revendication 7, caractérisé par le fait que l'émetteur/récepteur (4) est un émetteur/récepteur à évasion de fréquences.

FIG_1

# FIG_2

| 7 | 7 | 7 |
|---|---|---|
| PRIORITE 1 | PRIORITE i | PRIORITE n |

| | * | INFO 1  BLOC 1  PRIORITE 1 | 8 |

| | | INFO 1  BLOC 1  PRIORITE i | 8 |

| * | * | INFO 2  BLOC 1  PRIORITE 1 | 8 |

| * | * | INFO 2  BLOC 1  PRIORITE i | 8 |

| * | * | INFO 1  BLOC 2 | 8 |

9  10  11

# FIG_3

| | INFORMATIONS | 12 | ~240 |

| | 13 | 14 | 15 | 230 |
| 120 → | Seg. | Authen. | | |

| | 120 | ~220 |
| 16 | ADRESSE SOURCE | |

~210

| Préambule | Fanion | Adresse(s) destinataire | Commande | Longueur | | | CRC | Fanion |
|---|---|---|---|---|---|---|---|---|
| 18 | 19 | 20 | 21 | 22 | | 23 | 24 | 19 |

~200

0235012

# FIG_4

# FIG_5

# FIG_6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PROCEEDINGS IEEE INFOCOM 85, 26-28 mars 1985, Washington, D.C., pages 86-92, IEEE Computer Society Press, New York, US; J. JUBIN: "Current packet radio network protocols" * Paragraphes 2.b., 4.a. * | 1,2,7 | H 04 B    7/24 H 04 L   11/16 H 04 L   11/20 |
|  | --- |  |  |
| Y | Idem | 3-6,8 |  |
|  | --- |  |  |
| Y | WO-A-8 503 826   (ROSEMOUNT) * Page 3, lignes 11-27;  page  6, lignes  1-6;  page 10, ligne 24 - page 11, ligne 14; page 16, ligne 30 - page 17, ligne  17;  figures 1,3,4 * | 3-6 |  |
| A |  | 1 | **DOMAINES TECHNIQUES RECHERCHES (Int. Cl.4)** |
|  | --- |  | H 04 L H 04 B |
| Y | IEEE COMMUNICATIONS MAGAZINE, vol. 22, no. 11, novembre 1984, pages 24-40, IEEE, New York, US; F.A. TOBAGI et al.: "Packet radio and satellite networks" * Page  28,  colonne  de droite, ligne 35 - page  29,  colonne  de droite, ligne 24; figure 1 * | 8 |  |
|  | --- |  |  |
| A | Idem | 1,2,7 |  |
|  | ---                    -/- |  |  |

Le présent rapport de recherche a été établi pour toutes les revendications

| Lieu de la recherche | Date d'achèvement de la recherche | Examinateur |
|---|---|---|
| LA HAYE | 07-05-1987 | MIKKELSEN C. |

| Catégorie | Citation du document avec indication. en cas de besoin. des parties pertinentes | Revendication concernée | CLASSEMENT DE LA DEMANDE (Int. Cl.4) |
|---|---|---|---|
| | **DOCUMENTS CONSIDERES COMME PERTINENTS** | | Page   2 |
| A | IEEE TRANSACTIONS ON COMMUNICATIONS, vol. COM-28, no. 4, avril 1980, pages 468-488, IEEE, New York, US; F.A. TOBAGI: "Multiaccess protocols in packet communication systems" * Page 471, colonne de droite, ligne 11 - page 472, colonne de droite, ligne 15; page 477, colonne de gauche, lignes 13-20; page 482, colonne de gauche, lignes 16-51 * | 1-4 | |
| A | EP-A-0 095 959 (THOMSON) * Résumé; page 3, lignes 29-31; page 13, lignes 15-17 * | 1,6-8 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 07-05-1987 | MIKKELSEN C. |